# EUROPEAN PATENT APPLICATION

(11) **EP 2 706 673 A1**
(43) Date of publication of application: **12.03.2014**
(21) Application number: 13182140.7
(22) Date of filing: 29.08.2013
(51) Int. Cl.: H04B 7/06, H04B 7/08, H01Q 3/26, H01Q 3/24

(54) **Communication device, communication control method, and program**

(30) Priority: 07.09.2012 JP 2012197162
(71) Applicant: Sony Corporation, Tokyo 108-0075 (JP)
(72) Inventor: Itagaki, Takeshi, Tokyo, 108-0075 (JP)
(74) Representative: Beder, Jens

(57) **Abstract**

There is provided a communication device including an adaptive array antenna, a calculation section which calculates a change in direction of the communication device based on information detected by a sensor, and a control section which controls an update trigger for a beam pattern of the adaptive array antenna based on the calculated change.

## Description

### BACKGROUND

The present disclosure relates to a communication device, a communication control method, and a program.

In wireless communication systems, which use extremely attenuated frequencies with high straight advancing property such as millimeter waves, beam steering is often used by an adaptive array antenna in order to increase a link margin. In the case where a hand-held type terminal device wirelessly communicates by using this beam steering, it may be necessary to consider fluctuations of the wireless channels due to movement, rotation or the like of this terminal device. This is because if beam steering is not performed towards an optimal direction with an optimal timing, in accordance with changes in the wireless channels, the stability of the wireless link will be impaired and a package error rate will increase.

A tracking performance will naturally increase if an update frequency of a beam pattern increases, and the stability of the communication link will generally improve. However, uniformly increasing an update frequency of the beam pattern has such disadvantages as an increase in power consumption and a decrease in an execution band due to beam search. Further, in the case where an error of the beam search itself is not able to be ignored, there will also be a disadvantage in which there is an increased risk of characteristics inversely deteriorating by an update for the beam pattern. Therefore, technology has been proposed for adjusting the update frequency of a beam pattern.

For example, technology is disclosed in JP 2006-203674A in which a Beamformer adjusts the update frequency of a beam pattern, based on information of an azimuth angle with a Beamformee from the device itself, and information of a distance between the device itself and the Beamformee. This Beamformer is a communication device which generates beams, and this Beamformee is a communication device which receives beams.

Further, for example, technology is disclosed in JP 2007-110365A which adjusts the update frequency of a beam pattern in accordance with speed or position information of a moving Beamformee.

Further, for example, according to the disclosure disclosed in JP 2005-102136A, while technology which adjusts the update frequency of a beam pattern is not disclosed, technology which changes a bit rate based on a fluctuation speed of an incoming wave angle is disclosed.

### SUMMARY

However, according to the disclosure disclosed in JP 2006-203674A, it may be necessary for the Beamformer to detect the position of the Beamformee by some type of method. Further, since a straight line angle is used with a communication partner, an optimal beam will not be generated by an update for the beam pattern in the case of non-line of sight communication, such as when there is an obstacle between the Beamformer and the Beamformee.

Further, according to the disclosure disclosed in JP 2007-110365A, it may be necessary for the Beamformer to detect the speed of the Beamformee in advance. Further, since only the speed is used, and the movement direction is not considered, an update for the beam pattern can be generated in the case where it is originally unnecessary.

Further, according to the disclosure disclosed in JP 2005-102136A, since it may be necessary to perform an estimation of the incoming wave angle from a reception signal, it has a defect in that large operations will become necessary.

Accordingly, it is desirable for a mechanism to be provided in which it is possible to appropriately update a beam pattern of an adaptive array antenna with simple processes, without performing a detection of the state of the communication device on the reception side, or a request of processes to the communication device on the reception side.

Various aspects and features of the invention are defined in the appended claims.
According to an embodiment of the present disclosure, there is provided a communication device including an adaptive array antenna, a calculation section which calculates a change in direction of the communication device based on information detected by a sensor, and a control section which controls an update trigger for a beam pattern of the adaptive array antenna based on the calculated change.

Further, according to an embodiment of the present disclosure, there is provided a communication control method including calculating a change in direction of a communication device including an adaptive array antenna based on information detected by a sensor, and controlling an update trigger for a beam pattern of the adaptive array antenna based on the calculated change.

Further, according to an embodiment of the present disclosure, there is provided a program for causing a computer, which controls a communication device including an adaptive array antenna, to function as a calculation section which calculates a change in direction of the communication device based on information detected by a sensor, and a control section which controls an update trigger for a beam pattern of the adaptive array antenna based on the calculated change.

According to the present disclosure as described above, it becomes possible to appropriately update a beam pattern of an adaptive array antenna with simple processes, without performing a detection of the state of the communication device on the reception side, or a request of processes to the communication device on the reception side.

### BRIEF DESCRIPTION OF THE DRAWINGS

Embodiments of the invention are now described with reference to the enclosed drawings, throughout which like references denote like parts and in which
FIG. 1 is an explanatory diagram which shows an example of a schematic configuration of a wireless communication system according to an embodiment of the present disclosure;
FIG. 2 is a block diagram which shows an example of a configuration of a communication device according to a first embodiment of the present disclosure;
FIG. 3 is an explanatory diagram for describing an example of an adaptive array antenna;
FIG. 4 is a flow chart which shows an example of a schematic flow for an update trigger control process according to the first embodiment;
FIG. 5 is a flow chart which shows an example of a schematic flow for a beam pattern update control process according to the first embodiment;
FIG. 6 is a flow chart which shows an example of a schematic flow for a beam pattern update process according to the first embodiment;
FIG. 7 is a block diagram which shows an example of a configuration of a communication device, and a configuration of a communication device 300 connected to this communication device, according to a modified example of the first embodiment;
FIG. 8 is a block diagram which shows an example of a configuration of a communication device according to a second embodiment of the present disclosure;
FIG. 9 is a flow chart which shows an example of a schematic flow for an update trigger control process according to the second embodiment;
FIG. 10 is a flow chart which shows an example of a schematic flow for a beam pattern update control process according to the second embodiment;
FIG. 11 is a block diagram which shows an example of a configuration of a communication device according to a third embodiment of the present disclosure;
FIG. 12 is a flow chart which shows an example of a schematic flow for an update trigger control process according to the third embodiment;
FIG. 13 is a flow chart which shows an example of a schematic flow for a transmission data judgment process according to the third embodiment;
FIG. 14 is a block diagram which shows an example of a configuration of a communication device according to a fourth embodiment of the present disclosure; and
FIG. 15 is a flow chart which shows an example of a schematic flow for an update trigger control process according to the fourth embodiment.

### DETAILED DESCRIPTION OF THE EMBODIMENT(S)

Hereinafter, preferred embodiments of the present disclosure will be described in detail with reference to the appended drawings. Note that, in this specification and the appended drawings, structural elements that have substantially the same function and structure are denoted with the same reference numerals, and repeated explanation of these structural elements is omitted.

The description will be given in the following order.
1. Schematic configuration of the wireless communication system
2. The first embodiment
   2.1. Configuration of the communication device
   2.2. Flow of the processes
   2.3. Modified example
3. The second embodiment
   3.1. Configuration of the communication device
   3.2. Flow of the processes
4. The third embodiment
   4.1. Configuration of the communication device
   4.2. Flow of the processes
5. The fourth embodiment
   5.1. Configuration of the communication device
   5.2. Flow of the processes
6. Conclusion

### <<1, Schematic configuration of the wireless communication system>>

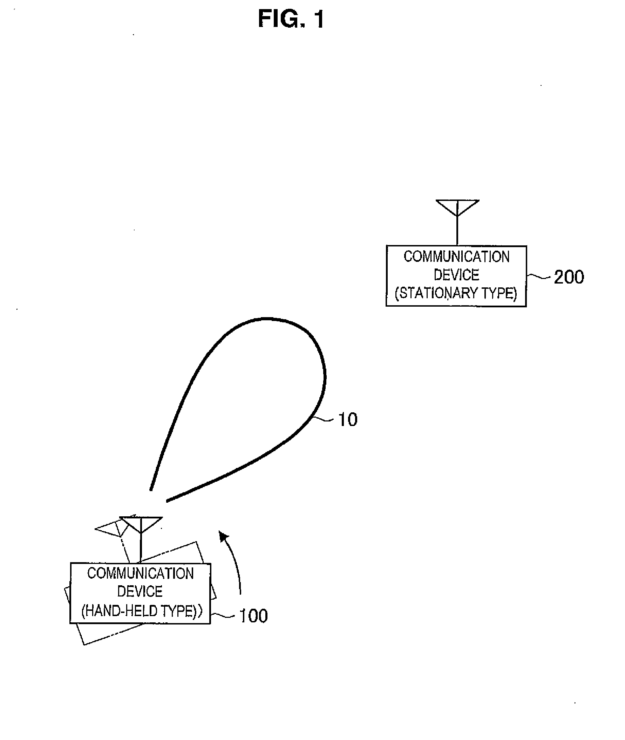

First, a schematic configuration of a wireless communication system according to an embodiment of the present disclosure will be described with reference to FIG. 1. FIG. 1 is an explanatory diagram which shows an example of a schematic configuration of a wireless communication system according to an embodiment of the present disclosure. With reference to FIG. 1, the wireless communication system includes a communication device 100 and a communication device 200.

### (Communication device 100)

The communication device 100 is a communication device which has an adaptive array antenna. The communication device 100 generates a beam 10 of some beam pattern, by the adaptive array antenna. Further, the communication device 100 transmits data by using the generated beam 10. In this way, the communication device 100 operates as a Beamformer.

Further, the communication device 100 updates the beam pattern of the adaptive array antenna. For example, the communication device 100 updates the beam pattern of the adaptive array antenna to a beam pattern which optimizes the link quality of the communication device 200. Then, the communication device 100 generates a beam of the updated beam pattern.

Further, the communication device 100 is a hand-held type communication device. Therefore, the communication device 100 can irregularly move or rotate. That is, the direction of the communication device 100 can change irregularly. If the direction of the communication device 100 is changed, the direction of the generated beam will also change.

Note that the communication device 100 may receive a beam generated by another device which includes the communication device 200, by the adaptive array antenna. Also, the communication device 100 may receive data from the received beam. In this way, the communication device 100 may also operate as a Beamformee.

### (Communication device 200)

The communication device 200 is a communication device which has an adaptive array antenna. The communication device 200 receives a beam generated by another device which includes the communication device 100, by the adaptive array antenna. Also, the communication device 200 receives data from the generated beam. In this way, the communication device 200 operates as a Beamformee.

Further, the communication device 200 is, for example, a stationary type communication device. Therefore, the direction of the communication device 200 can be fixed.

Note that the communication device 200 may generate a beam of some beam pattern, by the adaptive array antenna. Further, the communication device 200 may transmit data by using the generated beam. In this way, the communication device 200 may also operate as a Beamformer. In this case, the communication device 200 may update the beam pattern of the adaptive array antenna.

Heretofore, a schematic configuration of a wireless communication system according to an embodiment of the present disclosure has been described. In an embodiment of the present disclosure, it becomes possible for the communication device 100 to appropriately update a beam pattern of an adaptive array antenna with simple processes, without performing a detection of the state of the communication device 200 or a request of processes to the communication device 200. Hereinafter, the specific contents will be described in <2. The first embodiment>, <3. The second embodiment>, <4. The third embodiment>, and <5. The fourth embodiment>.

### <<2. The first embodiment>>

First, a first embodiment of the present disclosure will be described. According to the first embodiment of the present disclosure, an update for a beam pattern of the adaptive array antenna is triggered, based on a change in direction of the communication device 100. Hereinafter, the first embodiment will be described in the order of <2.1. Configuration of the communication device>, <2.2. Flow of the processes>, and <2.3. Modified example>.

### <2.1. Configuration of the communication device>

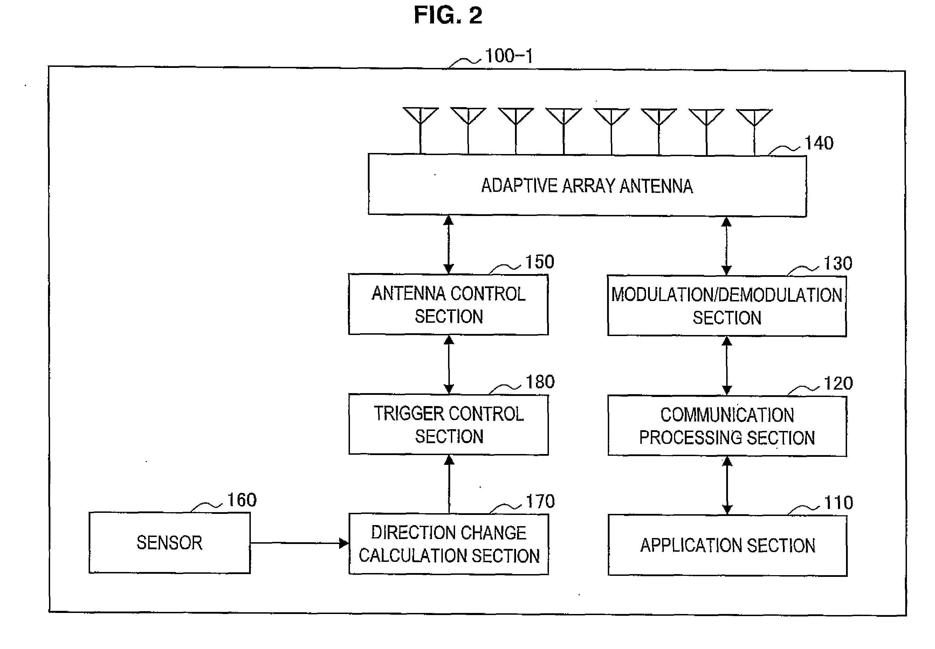

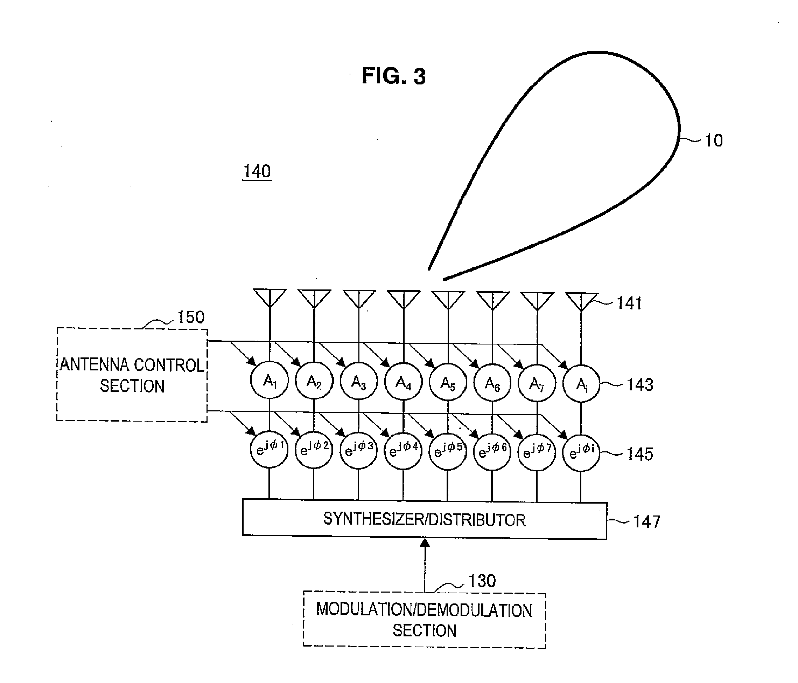

An example of a configuration of a communication device 100-1 according to the first embodiment will be described with reference to FIGS. 2 and 3. FIG. 2 is a block diagram which shows an example of a configuration of the communication device 100-1 according to the first embodiment. With reference to FIG. 2, the communication device 100-1 includes an application section 110, a communication processing section 120, a modulation/demodulation section 130, an adaptive array antenna 140, an antenna control section 150, a sensor 160, a direction change calculation section 170, and a trigger control section 180.

### (Application section 110)

The application section 110 provides application functions to a user of the communication device 100-1. For example, the application section 110 generates new data by acquiring data and executing a process by using this data.

Further, in the case where data is transmitted to another device, the application section 110 makes a request to the communication processing section 120 so that this data is transmitted to this other device. Further, the application section 110 acquires, from the communication processing section 120, the data transmitted from the other device to the communication device 100-1.

Note that the application section 110 can be implemented, for example, by an application program.

### (Communication processing section 120)

The communication processing section 120 executes processes for transmitting data. For example, when data is received from the application section 110, the communication processing section 120 generates a packet from this data, and executes processes such as header addition for media access control (MAC), and the addition of error detection codes. Also, the communication processing section 120 provides data after processing to the modulation/demodulation section 130.

Further, the communication processing section 120 executes processes for receiving data. For example, when data is received from the modulation/demodulation section 130, the communication processing section 120 executes processes such as header analysis, error detection, and reorder processing. Also, the communication processing section 120 provides data after processing to the application section 110.

### (Modulation/demodulation section 130)

The modulation/demodulation section 130 modulates data received from the communication processing section 120, and outputs modulation signals to the adaptive array antenna 140. Further, the modulation/demodulation section 130 demodulates signals from the adaptive array antenna 140, and outputs demodulation signals to the communication processing section 120.

### (Adaptive array antenna 140)

The adaptive array antenna 140 generates a beam of some beam pattern. Hereinafter, an example of the adaptive array antenna 140 will be specifically described by referring to FIG. 3.

FIG. 3 is an explanatory diagram for describing an example of the adaptive array antenna 140. With reference to FIG. 3, the adaptive array antenna 140 includes a plurality of antenna elements 141, variable amplifiers 143, variable phase shifters 145, and a synthesizer/distributor 147. It becomes possible to generate a beam of a desired beam pattern, by controlling the phase and amplitude of radio waves transmitted/received by each antenna element 141. Control of the phase and amplitude of radio waves transmitted/received by each antenna element 141 is implemented by a setting of the weights of the variable amplifiers 143 and the variable phase shifters 145. This control is performed by the antenna control section 150, which is described later. Further, the synthesizer/distributor 147 distributes the modulation signals from the modulation/demodulation section 130 to each antenna element 141. Further, the synthesizer/distributor 147 synthesizes the signals from the plurality of antenna elements 141, and outputs a synthesized signal to the modulation/demodulation section 130.

### (Antenna control section 150)

The antenna control section 150 controls the generation of beams by the adaptive array antenna 140.

For example, the antenna control section 150 allows the adaptive array antenna 140 to generate a beam of a desired beam pattern. More specifically, for example, the antenna control section 150 allows the adaptive array antenna 140 to generate a beam of a desired beam pattern, by performing a setting of the weights of the variable amplifiers 143 and the variable phase shifters 145 of the adaptive array antenna 140. In this way, for example, since a beam pattern of the adaptive array antenna 140 is determined by a setting of the weights of the variable amplifiers 143 and the variable phase shifters 145, the setting values (that is, the weights) of the variable amplifiers 143 and the variable phase shifters 145 are stored in a storage section (not shown in the figure).

Further, the antenna control section 150 updates the beam pattern of the adaptive array antenna 140. That is, the antenna control section 150 allows the adaptive array antenna 140 to generate a beam of a new beam pattern.

In particular, in the first embodiment, an update for the beam pattern of the adaptive array antenna 140 is triggered by the trigger control section 180. Specifically, for example, when an instruction to update the beam pattern is issued by the trigger control section 180, the antenna control section 150 updates the beam pattern of the adaptive array antenna 140.

Further, for example, an update for the beam pattern of the adaptive array antenna 140 is also triggered in the case where a prescribed condition (hereinafter, called a "beam pattern update condition") is satisfied. More specifically, for example, when the beam pattern update condition is satisfied, the antenna control section 150 determines that the beam pattern of the adaptive array antenna 140 is to be updated. Then, the antenna control section 150 updates the beam pattern of the adaptive array antenna 140.

The beam pattern update condition includes, for example, the lapsing of an update period for regularly updating the beam pattern of the adaptive array antenna 140. Further, this beam pattern update condition may also include a communication error in wireless communication using the adaptive array antenna 140 exceeding a first threshold value (hereinafter, called a "threshold Tₑᵣᵣₒᵣ"). Further, this beam pattern update condition may also include a communication amount in wireless communication using this adaptive array antenna 140 exceeding a second threshold (hereinafter, called a "threshold T_{traffic}").

### (Sensor 160)

The sensor 160 detects information for calculating a change in direction of the communication device 100-1. This direction of the communication device 100-1 is, for example, a three-dimensional direction of the communication device 100-1 (hereinafter, called a "three-dimensional direction").

Specifically, for example, the sensor 160 includes a geomagnetic sensor and an acceleration sensor. Also, this geomagnetic sensor detects azimuth information which shows a two-dimensional azimuth of the communication device 100-1. Further, this acceleration sensor detects gravitational acceleration direction information which shows the direction of gravitational acceleration of the communication device 100-1 (that is, shows the inclination to the vertical direction of the communication device 100-1). That is, the sensor 160 detects this azimuth information and this gravitational acceleration direction information.

Note that the sensor 160 may include a three-axis angular velocity sensor in place of the geomagnetic sensor and acceleration sensor. Also, this three-axis angular velocity sensor may detect angular velocity information which shows a three-axis angular velocity of the communication device 100-1.

### (Direction change calculation section 170)

The direction change calculation section 170 calculates a change in the direction of the communication device 100-1, based on the information detected by the sensor 160. This direction of the communication device 100-1 is, for example, a three-dimensional direction.

For example, the direction change calculation section 170 calculates, as this change, a difference between the direction of the communication device 100-1 when the beam pattern of the adaptive array antenna 140 is updated, and the direction of the communication device 100-1 afterwards. More specifically, for example, as described above, the sensor 160 detects azimuth information which shows a two-dimensional azimuth of the communication device 100-1, and gravitational acceleration direction information which shows the inclination to the vertical direction of the communication device 100-1. Then, the direction change calculation section 170 calculates a three-dimensional direction of the communication device 100-1, from the two-dimensional azimuth shown by this azimuth information and the inclination to the vertical direction shown by this gravitational acceleration direction information. In addition, specifically, the direction change calculation section 170 allows a storage section (not shown in the figure) to store the three-dimensional direction, by calculating the three-dimensional direction when the beam pattern of the adaptive array antenna 140 is updated. Then, the direction change calculation section 170 calculates a difference between the stored three-dimensional direction (the direction of the communication device 100-1 when the beam pattern is updated) and a three-dimensional direction calculated as required (that is, the direction of the communication device 100-1 afterwards), by calculating the three-dimensional position afterwards as required.

Note that, as described above, the sensor 160 may detect angular velocity information which shows a three-axis angular velocity of the communication device 100-1. Also, the direction change calculation section 170 may calculate this difference as required, by updating the beam pattern of the adaptive array antenna 140 and thereafter integrating the angular velocity.

In this way, it becomes possible to know to what extent the direction of the peak of the beam has deviated from the original optimal direction, by calculating a difference between the direction of the communication device 100-1 when the beam pattern is updated, and the direction of the communication device 100-1 afterwards.

### (Trigger control section 180)

The trigger control section 180 controls an update trigger for the beam pattern of the adaptive array antenna 140, based on the calculated change in direction of the communication device 100-1. In particular, in the first embodiment, the trigger control section 180 triggers an update for the beam pattern of the adaptive array antenna 140, based on the calculated change in direction of the communication device 100-1.

More specifically, for example, the trigger control section 180 controls this update trigger, based on a comparison result between this calculated change and a third threshold. That is, the trigger control section 180 triggers an update for the beam pattern of the adaptive array antenna 140, based on a comparison result between this calculated difference and the threshold T_{angle}. In addition, specifically, for example, the trigger control section 180 judges whether or not the size of this difference has exceeded the threshold T_{angle}. Then, if the size of this difference has exceeded the threshold T_{angle}, the trigger control section 180 issues an instruction to update the beam pattern of the adaptive array antenna 140 to the antenna control section 150.

In this way, it becomes possible to immediately update the beam pattern, in the case where the direction of the communication device 100-1 significantly changes, that is, in the case where the direction of the peak of the beam significantly changes, by triggering an update for the beam pattern. That is, it becomes possible to appropriately update the beam pattern of the adaptive array antenna 140. Therefore, the tracking performance of the beam pattern will increase. As a result, the direction of the peak of the beam will hardly deviate from the optimal direction, even if the direction of the communication device 100-1 is significantly changed. Also, a decrease of the SN ratio (Signal-to-Noise Ratio) of a wireless link and an increase in package errors can be suppressed. Further, in the case where the direction of the communication device 100-1 does not significantly change, in this way, since an update for the beam pattern is not triggered, power consumption can be suppressed to the minimum requirements.

Further, in this way, since triggering an update for the beam pattern is implemented by internal processes in the communication device 100, a detection of the state of the communication device 200, which is a communication partner, and a request of processes to the communication device 200 may both not be necessary. Therefore, complex processes between the communication devices are not generated. In addition, these internal processes are simple processes such as the calculation of a change in direction of the communication device 100. Therefore, it is possible for the beam pattern of the adaptive array antenna 140 to be updated by simple processes.

Note that this third threshold (for example, the threshold T_{angle}) may be changed in accordance with a request of application software which uses wireless communication using the adaptive array antenna 140. Since an update frequency of the beam pattern will become higher if the this third threshold becomes smaller, while the tracking performance of the beam pattern will increase for the operations of the communication device 100-1, power consumption of the communication device 100-1 will also increase. Since the peak of the beam will hardly deviate when the tracking performance of the beam pattern increases, a decrease of the SN ratio of a wireless link and an increase in package errors can be suppressed. On the other hand, since the update frequency of the beam pattern will become lower if this third threshold is becomes higher, while power consumption of the communication device 100-1 will decrease, the tracking performance of the beam pattern will also decrease for the operation of the communication device 100-1. Since the peak of the beam deviates when the tracking performance of the beam pattern decreases, the SN ratio of a wireless link can decrease and package errors can increase. That is, a trade-off exists between communication quality and power consumption, related to this third threshold. Therefore, for example, this third threshold may be changed, in accordance with communication quality which is acceptable in the application software (for example, an allowable delay time, an allowable package loss rate and the like). In this case, the capability of the communication device 100-1 (for example, a loss correction capability by encoding) may also be considered.

According to the change of this threshold, power consumption can be sufficiently suppressed to a necessary level while satisfying a request for communication quality from application software.

Heretofore, an example of a configuration of the communication device 100-1 according to the first embodiment has been described. Note that FIG. 2 does not disclose all the constituent elements which may be necessary in wireless communication, such as an ADC (Analog Digital Converter), a DAC (Digital Analog Convertor), and a frequency converter. However, it is needless to say that including these constituent elements in the communication device 100-1 would be understood by those skilled in the art.

### <2.2. Flow of the processes>

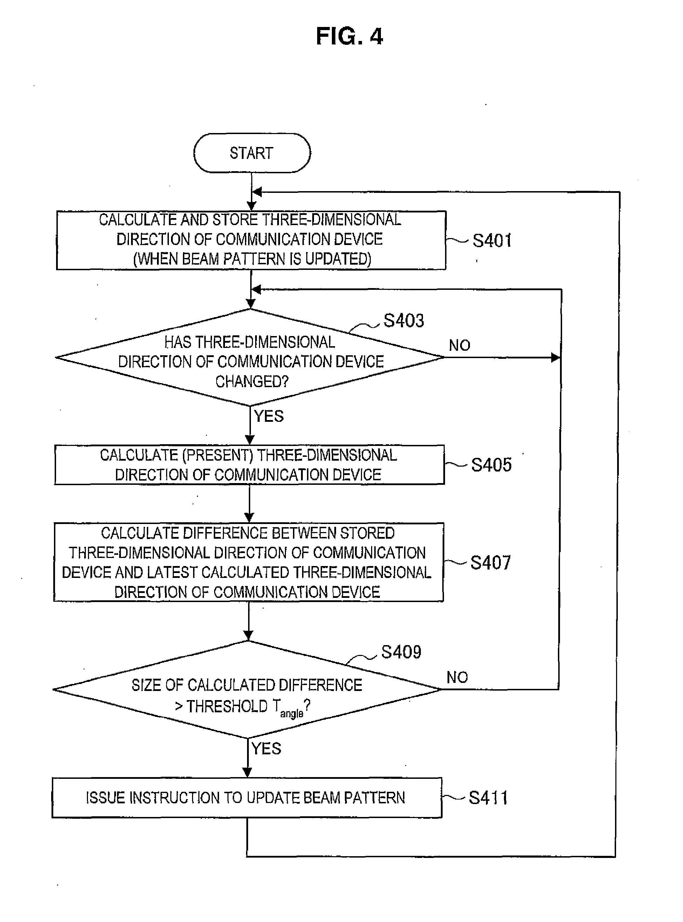

Next, various processes according to the first embodiment will be described with reference to FIGS. 4 to 6.

### (Update trigger control process)

First, an example of an update trigger control process according to the first embodiment will be described with reference to FIG. 4. FIG. 4 is a flow chart which shows an example of a schematic flow for an update trigger control process according to the first embodiment. When a connection between the communication device 100-1 and the communication device 200 is established, and a beam pattern of the adaptive array antenna 140 is updated, this update trigger control process begins.

In step S401, the direction change calculation section 170 allows a storage section (not shown in the figure) to store a three-dimensional direction, by calculating a three-dimensional direction of the communication device 100-1, from information detected by the sensor 160 (for example, azimuth information and gravitational acceleration direction information). This stored three-dimensional direction is a three-dimensional direction when the beam pattern of the adaptive array antenna 140 is updated.

In step S403, the direction change calculation section 170 judges whether or not the three-dimensional direction of the communication device 100-1 has changed. For example, the direction change calculation section 170 judges that the three-dimensional direction of the communication device 100-1 has changed, by judging whether or not the information detected by the sensor 160 (for example, azimuth information and gravitational acceleration direction information) has changed. If the three-dimensional direction has changed, the process proceeds to step S405. Otherwise, the process repeats step S403.

In step S405, the direction change calculation section 170 calculates the three-dimensional direction of the communication device 100-1, from the information detected by the sensor 160 (for example, azimuth information and gravitational acceleration direction information). This calculated three-dimensional direction is the present three-dimensional direction of the communication device 100-1.

In step S407, the direction change calculation section 170 calculates a difference between the stored three-dimensional direction (that is, the three-dimensional direction of the communication device 100-1 when the beam pattern is updated), and the latest calculated three-dimensional direction of the communication device 100-1 (that is, the present three-dimensional direction).

In step S409, the trigger control section 180 judges whether or not the size of the calculated difference has exceeded the threshold T_{angle}. If the size of this difference has exceeded the threshold T_{angle}, the process proceeds to step S411. Otherwise, the process returns to step S403.

In step S411, the trigger control section 180 issues an instruction to update the beam pattern of the adaptive array antenna 140 to the antenna control section 150. Then, the process returns to step S401.

### (Beam pattern update control process)

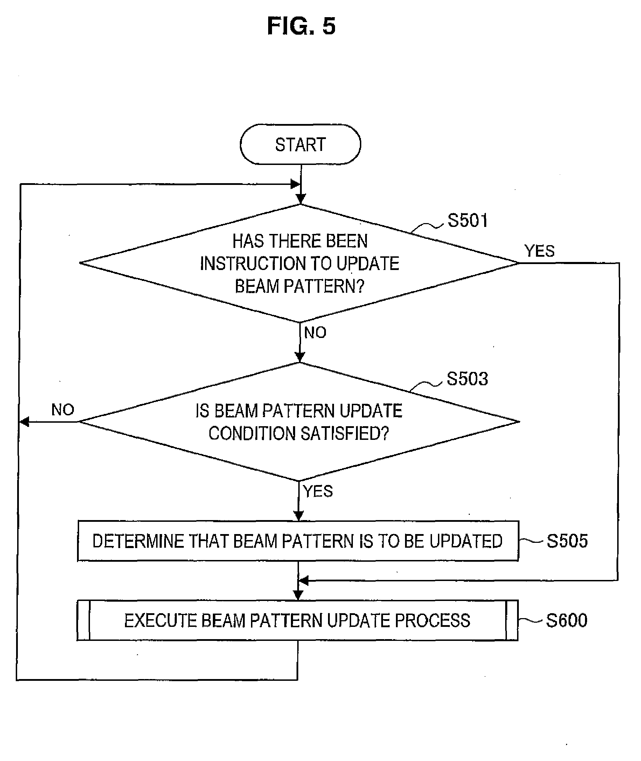

First, an example of a beam pattern update control process according to the first embodiment will be described with reference to FIG. 5. FIG. 5 is a flow chart which shows an example of a schematic flow for a beam pattern update control process according to the first embodiment. When a connection between the communication device 100 and the communication device 200 is established, this beam pattern update control process begins.

In step S501, the antenna control section 150 judges whether or not there has been an instruction to update the beam pattern by the trigger control section 180. In the case where there has been this instruction, the process proceeds to step S600. Otherwise, the process proceeds to step S503.

In step S503, the antenna control section 150 judges whether or not a beam pattern update condition is satisfied. This beam pattern update condition includes, for example, the lapsing of an update period for regularly updating the beam pattern of the adaptive array antenna 140. In this case, the antenna control section 150 judges whether or not the update period has lapsed. In the case where the beam pattern update condition is satisfied, the process proceeds to step S505. Otherwise, the process returns to step S501.

In step S505, the antenna control section 150 determines that the beam pattern of the adaptive array antenna 140 is to be updated.

In step S600, the antenna control section 150 executes a beam pattern update process. That is, the antenna control section 150 updates the beam pattern of the adaptive array antenna 140.

### (Beam pattern update process)

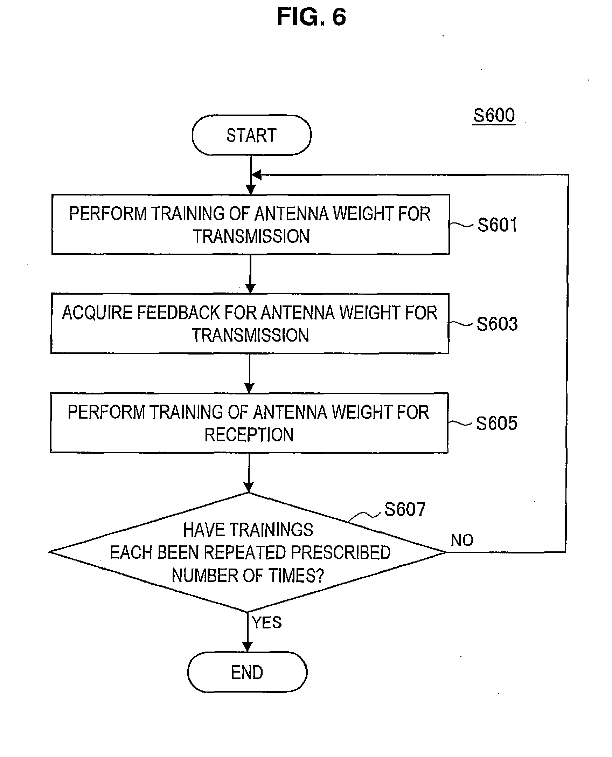

First, an example of a beam pattern update process (that is, step S600) according to the first embodiment will be described with reference to FIG. 6. FIG. 6 is a flow chart which shows an example of a schematic flow for a beam pattern update process according to the first embodiment.

In step S601, the antenna control section 150 performs training of the antenna weights (that is, the weights of the variable amplifiers 143 and the variable phase shifters 145) for the transmissions of the adaptive array antenna 140. That is, the antenna control section 150 sets antenna weights for the various transmissions of the adaptive array antenna 140, and generates beams of the beam patterns corresponding to these antenna weights. These beams are evaluated by being received by the communication device 200.

In step S603, feedback for the antenna weights for the transmissions is transmitted by the communication device 200, and the antenna control section 150 acquires this feedback when it is received by the communication device 100. This feedback shows which beam pattern is the optimal beam pattern (that is, the antenna weight for transmission). Then, the antenna control section 150 sets the optimal antenna weight for transmission in the adaptive array antenna 140.

In step S605, the antenna control section 150 performs training of the antenna weights for reception of the adaptive array antenna 140. That is, the antenna control section 150 sets the antenna weights for the various receptions of the adaptive array antenna 140, and evaluates these antenna weights. Then, the antenna control section 150 sets the optimal antenna weight for reception in the adaptive array antenna 140.

Then, in step S607, the antenna control section 150 judges whether or not the training of the antenna weight for transmission and the training of the antenna weight for reception have each been repeated a prescribed number of times. The processing ends if each of the trainings has been repeated a prescribed number of times. Otherwise, the process returns to step S601.

Heretofore, an example of a schematic flow for a beam pattern update process has been described. In this way, in the beam pattern update process, generally one out of the two communication devices fixes a beam pattern, while the other communication device tests various beam patterns and receives feedback of the optimal beam pattern. The beam pattern update process can be different depending on the standards of wireless communication. Apart from the above described steps, the beam pattern update process can include a step which performs an adjustment of the start timing, a step which estimates a delay time, and the like.

### <2.3. Modified example>

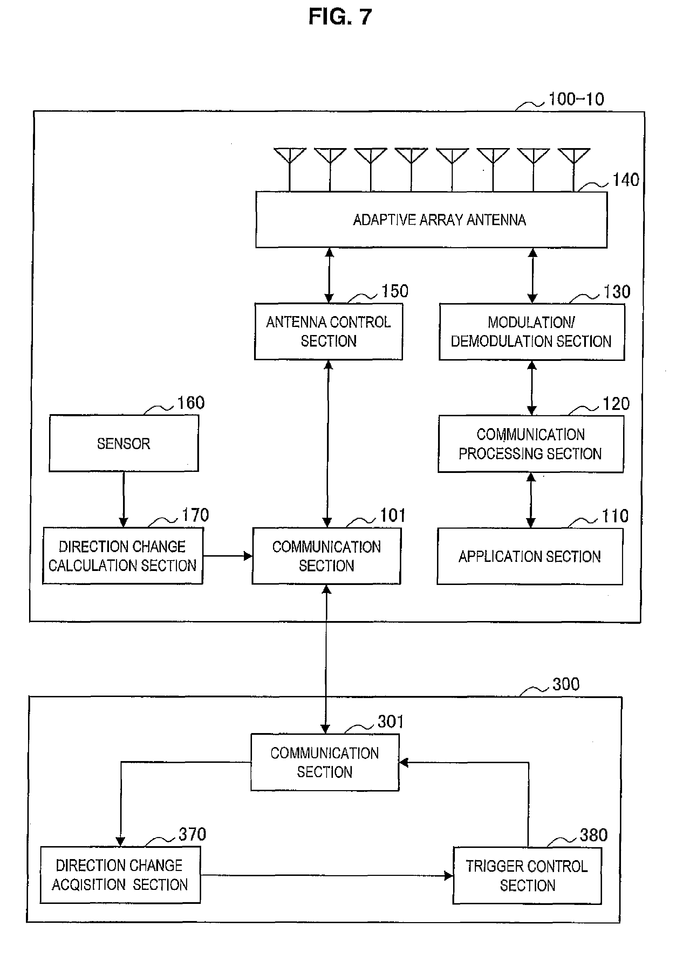

Next, a modified example of the first embodiment will be described with reference to FIG. 7. In the above described first embodiment, as shown in FIG. 2, the communication device 100-1 includes a trigger control section 180. On the other hand, in the modified example of the first embodiment, a communication device 100-10 according to this modified example does not include the trigger control section 180, and a communication device connected to the communication device 100-1 includes the functions of the trigger control section 180. Hereinafter, this point will be specifically described by referring to FIG. 7.

FIG. 7 is a block diagram which shows an example of a configuration of the communication device 100-10, and a configuration of a communication device 300 connected to this communication device 100-10, according to the modified example of the first embodiment. With reference to FIG. 7, the communication device 100-10 and the communication device 300 are shown.

### (Communication device 100-10)

Similar to the communication device 100-1 shown in FIG. 2, the communication device 100-10 includes an application section 110, a communication processing section 120, a modulation/demodulation section 130, an adaptive array antenna 140, an antenna control section 150, a sensor 160, and a direction change calculation section 170. In addition, the communication device 100-10 includes a communication section 101 for communicating with the communication device 300.

The communication section 101 transmits, to the communication device 300, a change in direction of the communication device 100-10 calculated by the direction change calculation section 170. Further, the communication section 101 receives an instruction to update the beam pattern from the communication device 300, and notifies this instruction to the antenna control section 150.

### (Communication device 300)

The communication device 300 includes a communication section 301 for communicating with the communication device 100-10, a direction change acquisition section 370, and a trigger control section 380.

The communication section 301 receives, from the communication device 100-10, the calculated change in direction of the communication device 100-10. Further, the communication section 301 transmits, to the communication device 100-10, an instruction to update the beam pattern from the trigger control section 380.

The direction change acquisition section 370 acquires the calculated change in direction of the communication device 100-10. More specifically, for example, when the communication section 301 receives the calculated change in direction of the communication device 100-10, the direction change acquisition section 370 acquires this change in direction. Then, this change in direction is provided to the trigger control section 380.

The trigger control section 380 operates similar to that of the trigger control section 180 of the communication device 100-1. That is, for example, the trigger control section 380 triggers an update (for example, issues an instruction to update) for the beam pattern of the adaptive array antenna 140, based on the calculated change in direction of the communication device 100-1.

As described above, the trigger control section can be included in a different communication device to that of the communication device 100-10 which includes the adaptive array antenna 140. Note that, in addition to the trigger control section, the direction change calculation section 170 may also not be included in the communication device 100-10, and may be included in the communication device 300. In this case, the information detected by the sensor is transmitted to the communication device 300 by the communication section 101, and a change in direction of the communication device 100-10 is calculated by the communication device 300. In this way, an arrangement in the communication device 300 of the constituent elements (that is, the trigger control section and the direction change calculation section) can be applied not only to the communication device 100-1 according to the first embodiment, but also to the communication device 100 according to embodiments 2 to 4, which are described later.

Heretofore, the first embodiment of the present disclosure has been described, and according to this first embodiment, it becomes possible to immediately update the beam pattern, in the case where the direction of the communication device 100 significantly changes, that is, in the case where the direction of the peak of the beam significantly changes. That is, it becomes possible to appropriately update the beam pattern of the adaptive array antenna 140. Therefore, the tracking performance of the beam pattern will increase. As a result, the direction of the peak of the beam will hardly deviate from the optimal direction, even if the direction of the communication device 100 is significantly changed. Also, a decrease of the SN ratio of a wireless link and an increase in package errors can be suppressed. Further, in the case where the direction of the communication device 100 does not significantly change, in this way, since an update for the beam pattern is not triggered, power consumption can be suppressed to the minimum requirements.

Further, in this way, since triggering an update for the beam pattern is implemented by internal processes in the communication device 100, a detection of the state of the communication device 200, which is a communication partner, and a request of processes to the communication device 200 may both not be necessary. Therefore, complex processes between the communication devices are not generated. In addition, these internal processes are simple processes such as the calculation of a change in direction of the communication device 100. Therefore, it is possible for the beam pattern of the adaptive array antenna 140 to be updated by simple processes.

### <<3. The second embodiment>>

To continue, a second embodiment of the present disclosure will be described. According to the second embodiment of the present disclosure, the condition which triggers an update for the beam pattern of the adaptive array antenna is changed, based on a change in direction of the communication device 100. Hereinafter, the second embodiment will be described in the order of <3.1. Configuration of the communication device>, and <3.2. Flow of the processes>.

### <3.1. Configuration of the communication device>

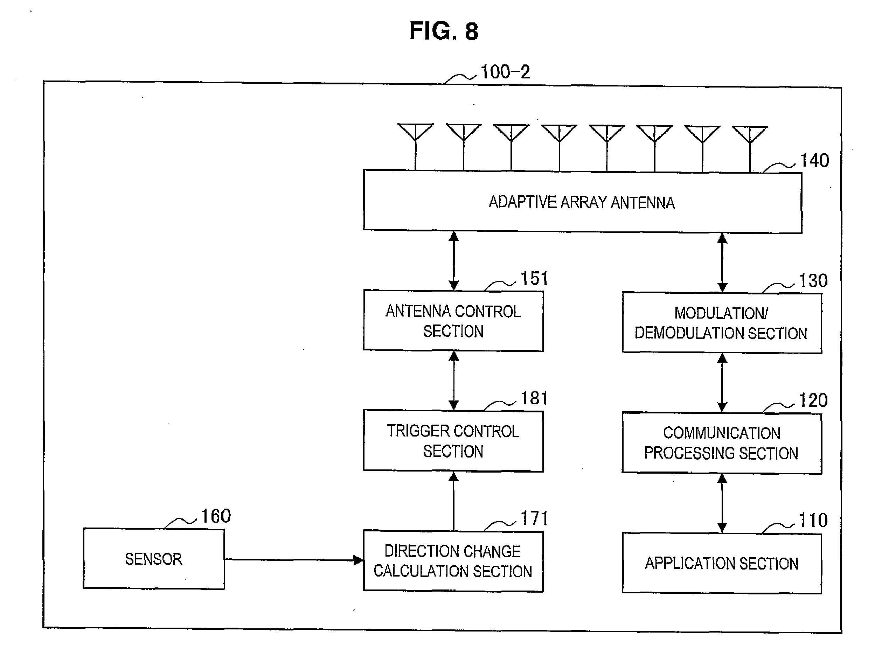

An example of a configuration of a communication device 100-2 according to the second embodiment will be described with reference to FIG. 8. FIG. 8 is a block diagram which shows an example of a configuration of the communication device 100-2 according to the second embodiment. With reference to FIG. 8, the communication device 100-2 includes an application section 110, a communication processing section 120, a modulation/demodulation section 130, an adaptive array antenna 140, an antenna control section 151, a sensor 160, a direction change calculation section 171, and a trigger control section 181.

Here, there is no difference between the first embodiment and the second embodiment for the application section 110, the communication processing section 120, the modulation/demodulation section 130, the adaptive array antenna 140, and the sensor 160. Therefore, here the antenna control section 151, the direction change calculation section 171, and the trigger control section 181 will be described.

### (Antenna control section 151)

The antenna control section 151 controls the generation of beams by the adaptive array antenna 140.

For example, the antenna control section 151 allows the adaptive array antenna 140 to generate a beam of a desired beam pattern. This point for the antenna control section 151 is the same as that for the antenna control section 150 of the first embodiment.

Further, the antenna control section 151 updates the beam pattern of the adaptive array antenna 140. That is, the antenna control section 151 allows the adaptive array antenna 140 to generate a beam of a new beam pattern.

In particular, in the second embodiment, the update for the beam pattern of the adaptive array antenna 140 is triggered in the case where a prescribed condition (that is, a beam pattern update condition) is satisfied. More specifically, for example, when the beam pattern update condition is satisfied, the antenna control section 151 determines that the beam pattern of the adaptive array antenna 140 is to be updated. Then, the antenna control section 151 updates the beam pattern of the adaptive array antenna 140.

This beam pattern update condition includes, for example, the lapsing of an update period for regularly updating the beam pattern of the adaptive array antenna 140. Further, this beam pattern update condition may also include a communication error in wireless communication using the adaptive array antenna 140 exceeding a first threshold value (that is, the threshold Tₑᵣᵣₒᵣ). Further, this beam pattern update condition may also include a communication amount in wireless communication using the adaptive array antenna 140 exceeding a second threshold (that is, the threshold T_{traffic}).

In particular, in the second embodiment, this beam pattern update condition is changed by the trigger control section 181, which is described later.

### (Direction change calculation section 171)

The direction change calculation section 171 calculates a change in the direction of the communication device 100-2, based on information detected by the sensor 160. This direction of the communication device 100-2 is, for example, a three-dimensional direction.

For example, the direction change calculation section 171 calculates, as this change, a change amount in the direction of the communication device 100-2 per a prescribed time. Specifically, for example, as described above, the sensor 160 detects azimuth information which shows a two-dimensional azimuth of the communication device 100-2, and gravitational acceleration direction information which shows the inclination to the vertical direction of the communication device 100-2. Then, the direction change calculation section 171 calculates a three-dimensional direction of the communication device 100-2, from the two-dimensional azimuth shown by this azimuth information and the inclination to the vertical direction shown by this gravitational acceleration direction information. In addition, specifically, the direction change calculation section 171 allows a storage section (not shown in the figure) to store a three-dimensional direction, by calculating a three-dimensional direction of the communication device 100-2, and additionally calculates a three-dimensional position after the lapsing of the prescribed time. Then, the direction change calculation section 171 calculates a difference between the stored three-dimensional direction and the three-dimensional direction calculated after the lapsing of the prescribed time (that is, a change amount in the direction of the communication device 100-2 per the prescribed time). In this way, the direction change calculation section 171 calculates a change amount in the direction of the communication device 100-2 per a prescribed time as required.

Note that, similar to that of the first embodiment, the sensor 160 may detect angular velocity information which shows a three-axis angular velocity of the communication device 100-2. Also, the direction change calculation section 171 may calculate this change amount by integrating the angular velocity per the prescribed time.

In this way, it becomes possible to know by what extent of speed the direction of the peak of the beam deviates, by calculating a change in direction of the communication device 100-2 per a prescribed time.

### (Trigger control section 181)

The trigger control section 181 controls an update trigger for the beam pattern of the adaptive array antenna 140, based on the calculated change in direction of the communication device 100-2. In particular, in the second embodiment, the trigger control section 181 changes a condition (that is, a beam pattern update condition) which triggers an update for the beam pattern of the adaptive array antenna 140, based on the calculated change in direction of the communication device 100-2.

More specifically, for example, the trigger control section 181 controls this update trigger, based on a comparison result between this calculated change and a third threshold. That is, the trigger control section 181 changes the beam pattern update condition, based on a comparison result between a change amount in the direction of the communication device 100-2 per a prescribed time and the threshold T_{angle_rate}. In addition, specifically, for example, the trigger control section 181 judges whether or not the size of this change amount has exceeded the threshold T_{angle_rate}. Then, if the size of the above change amount has exceeded the threshold T_{angle_rate}, the trigger control section 181 changes the beam pattern update condition.

Further, for example, this beam pattern update condition includes the lapsing of an update period for regularly updating the beam pattern of the adaptive array antenna 140. In this case, the trigger control section 181 changes the length of this update period. For example, in the case where the size of a change amount in the direction of the communication device 100-2 per a prescribed time exceeds the threshold T_{angle_rate}, the trigger control section 181 shortens this update period. That is, in the case where a change speed in the direction of the communication device 100-2 is fast, the beam pattern will be updated with a shorter period.

Further, this beam pattern update condition may include a communication error in wireless communication using the adaptive array antenna 140 exceeding a first threshold (that is, the threshold Tₑᵣᵣₒᵣ), and the trigger control section 181 may change the threshold Terror. For example, in the case where the size of a change amount in the direction of the communication device 100-2 per a prescribed time exceeds the threshold T_{angle_rate}, the trigger control section 181 may reduce the threshold Terror. That is, in the case where a change speed in the direction of the communication device 100-2 is fast, the beam pattern will be updated with a reduced communication error.

Further, this beam pattern update condition may include a communication amount in wireless communication using this adaptive array antenna 140 exceeding a second threshold (that is, the threshold T_{traffic}), and the trigger control section 181 may change the threshold T_{traffic}. For example, in the case where the size of a change amount in the direction of the communication device 100-2 per a prescribed time exceeds the threshold T_{angle_rate}, the trigger control section 181 may reduce the threshold T_{traffic}. That is, in the case where a change speed in the direction of the communication device 100-2 is fast, the beam pattern will be updated with a reduced communication amount.

In this way, in the case where the direction of the communication device 100-2 significantly changes, by a change of the beam pattern update condition, an update frequency of the beam pattern can become higher. That is, it becomes possible to appropriately update the beam pattern of the adaptive array antenna 140. Therefore, the tracking performance of the beam pattern will increase. As a result, the direction of the peak of the beam will hardly deviate from the optimal direction, even if the direction of the communication device 100-2 is significantly changed. Also, a decrease of the SN ratio of a wireless link and an increase in package errors can be suppressed. Further, in the case where the direction of the communication device 100-2 does not significantly change, in this way, since an update frequency of the beam pattern does not become high, power consumption can be suppressed to the minimum requirements.

Further, in this way, since a change of the beam pattern update condition is implemented by internal processes in the communication device 100, a detection of the state of the communication device 200, which is a communication partner, and a request of processes to the communication device 200 may both not be necessary. Therefore, complex processes between the communication devices are not generated. In addition, these internal processes are simple processes such as the calculation of a change in direction of the communication device 100. Therefore, it is possible for the update frequency of the beam pattern of the adaptive array antenna 140 to be improved by simple processes.

Note that this third threshold (for example, the threshold T_{angle_rate}) may be changed in accordance with a request of application software which uses wireless communication using the adaptive array antenna 140. This point for the trigger control section 181 is the same as that for the trigger control section 180 of the first embodiment.

Further, this update period, threshold Tₑᵣᵣₒᵣ, and threshold T_{traffic} may also be changed in accordance with a request of application software which uses wireless communication using the adaptive array antenna 140.

### <3.2. Flow of the processes>

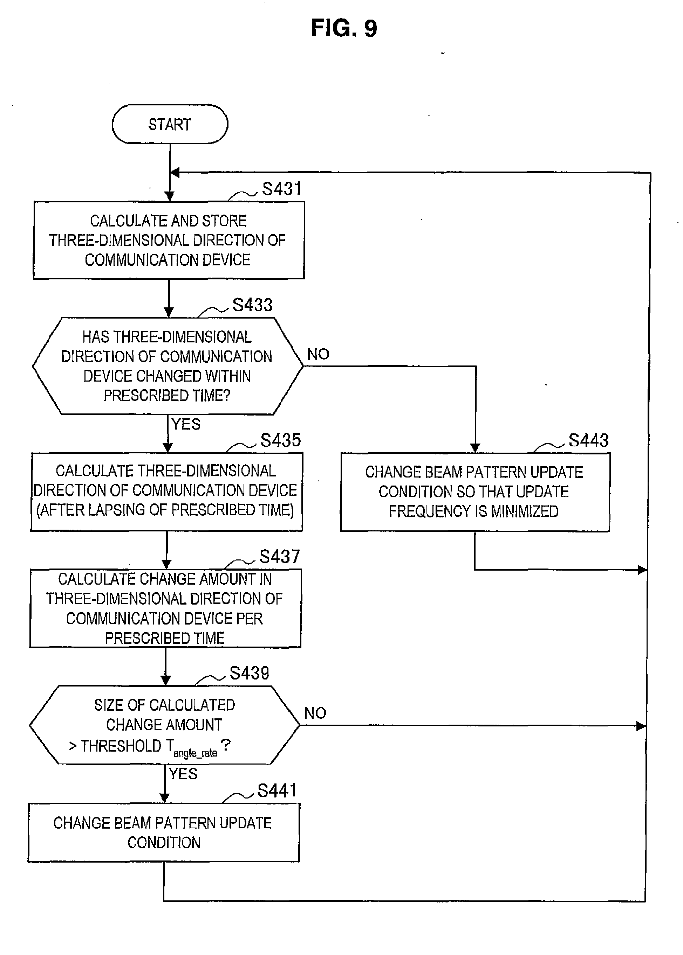

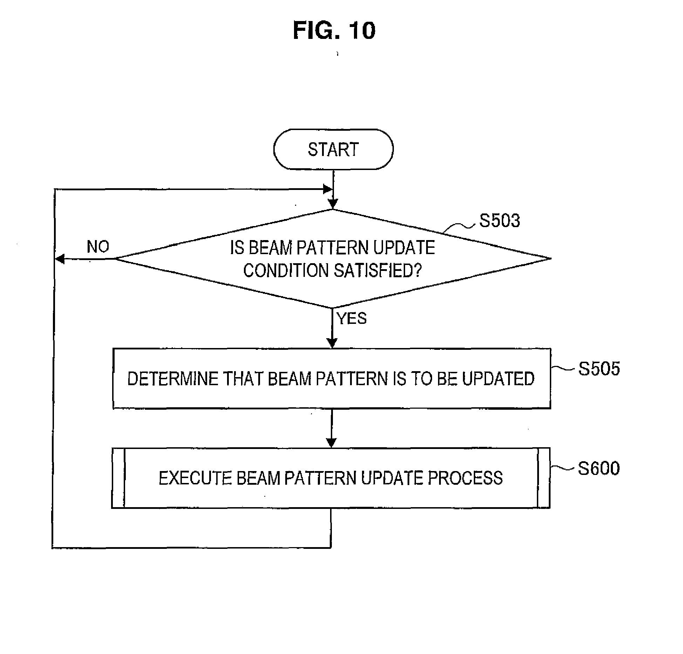

Next, various processes according to the second embodiment will be described with reference to FIGS. 9 and 10.

### (Update trigger control process)

First, an example of an update trigger control process according to the second embodiment will be described with reference to FIG. 9. FIG. 9 is a flow chart which shows an example of a schematic flow for an update trigger control process according to the second embodiment. When a connection between the communication device 100-2 and the communication device 200 is established, this update trigger control process begins.

In step S431, the direction change calculation section 171 allows a storage section (not shown in the figure) to store a three-dimensional direction, by calculating a three-dimensional direction of the communication device 100-2, from information detected by the sensor 160 (for example, azimuth information and gravitational acceleration direction information). This stored three-dimensional direction is a three-dimensional direction prior to the lapsing of a prescribed time.

In step S433, the direction change calculation section 171 judges whether or not the three-dimensional direction of the communication device 100-2 has changed within the prescribed time. For example, the direction change calculation section 171 judges that the three-dimensional direction of the communication device 100-2 has changed, by judging whether or not the information detected by the sensor 160 (for example, azimuth information and gravitational acceleration direction information) has changed. If the three-dimensional direction has changed, the process proceeds to step S435. Otherwise, the process proceeds to step S443.

In step S435, the direction change calculation section 171 calculates the three-dimensional direction of the communication device 100-2, from the information detected by the sensor 160 (for example, azimuth information and gravitational acceleration direction information). This calculated three-dimensional direction is the three-dimensional direction of the communication device 100-2 after the lapsing of the prescribed time.

In step S437, the direction change calculation section 171 calculates a difference between the stored three-dimensional direction (that is, the three-dimensional direction of the communication device 100-2 prior to the lapsing of the prescribed time) and the latest calculated three-dimensional direction of the communication device 100-2 (that is, the three-dimensional direction after the lapsing of the prescribed time). That is, the direction change calculation section 171 calculates a change amount in the three-dimensional direction of the communication device 100-2 per a prescribed time.

In step S439, the trigger control section 181 judges whether or not the size of the calculated change amount has exceeded the threshold T_{angle_rate}. If the size of this change amount has exceeded the threshold T_{angle_rate}, the process proceeds to step S441. Otherwise, the process returns to step S431.

In step S441, the trigger control section 181 changes the beam pattern update condition. Then, the process returns to step S431.

In step S443, the trigger control section 181 changes the beam pattern update condition so that the update frequency is minimized. That is, in the case where the direction of the communication device 100-2 does not change, the update frequency of the beam pattern is minimized.

### (Beam pattern update control process)

First, an example of a beam pattern update control process according to the second embodiment will be described with reference to FIG. 10. FIG. 10 is a flow chart which shows an example of a schematic flow for a beam pattern update control process according to the second embodiment. When a connection between the communication device 100 and the communication device 200 is established, this beam pattern update control process begins.

Apart from not including step S501, the beam pattern update control process according to the second embodiment shown in FIG. 10 is the same as the beam pattern update control process according to the first embodiment shown in FIG. 5.

Heretofore, the second embodiment of the present disclosure has been described, and according to this second embodiment, in the case where the direction of the communication device 100 significantly changes, an update frequency of the beam pattern can become higher. That is, it becomes possible to appropriately update the beam pattern of the adaptive array antenna 140. Therefore, the tracking performance of the beam pattern will increase. As a result, the direction of the peak of the beam will hardly deviate from the optimal direction, even if the direction of the communication device 100 is significantly changed. Also, a decrease of the SN ratio of a wireless link and an increase in package errors can be suppressed. Further, in the case where the direction of the communication device 100 does not significantly change, in this way, since an update frequency of the beam pattern does not become high, power consumption can be suppressed to the minimum requirements.

Further, in this way, since a change of the beam pattern update condition is implemented by internal processes in the communication device 100, a detection of the state of the communication device 200, which is a communication partner, and a request of processes to the communication device 200 may both not be necessary. Therefore, complex processes between the communication devices are not generated. In addition, these internal processes are simple processes such as the calculation of a change in direction of the communication device 100. Therefore, it is possible for the update frequency of the beam pattern of the adaptive array antenna 140 to be improved by simple processes.

### <<4. The third embodiment>>

To continue, a third embodiment of the present disclosure will be described. According to the third embodiment of the present disclosure, control of an update trigger is stopped, in the case where it is judged that there is no data to be transmitted by using the adaptive array antenna. Hereinafter, the third embodiment will be described in the order of <4.1. Configuration of the communication device>, and <4.2. Flow of the processes>.

### <4.1. Configuration of the communication device>

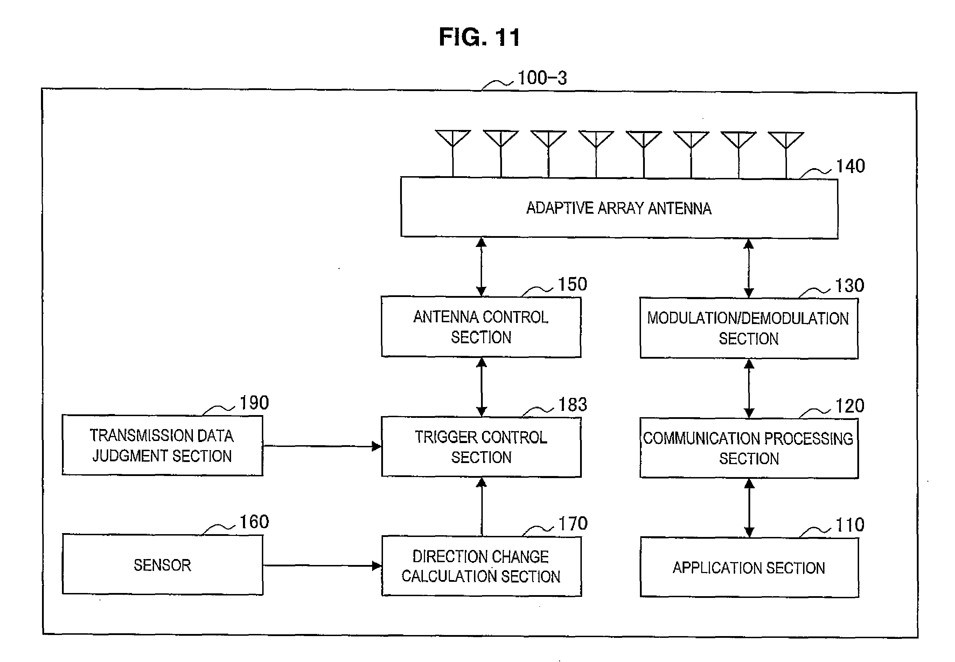

An example of a configuration of a communication device 100-3 according to the third embodiment will be described with reference to FIG. 11. FIG. 11 is a block diagram which shows an example of a configuration of the communication device 100-3 according to the third embodiment. With reference to FIG. 11, the communication device 100-3 includes an application section 110, a communication processing section 120, a modulation/demodulation section 130, an adaptive array antenna 140, an antenna control section 150, a sensor 160, a direction change calculation section 170, a trigger control section 183, and a transmission data judgment section 190.

Here, there is no difference between the first embodiment and the third embodiment for the application section 110, the communication processing section 120, the modulation/demodulation section 130, the adaptive array antenna 140, the antenna control section 150, the sensor 160, and the direction change calculation section 170. Therefore, here the trigger control section 183 and the transmission data judgment section 190 will be described.

### (Transmission data judgment section 190)

The transmission data judgment section 190 judges whether or not there is data to be transmitted by using the adaptive array antenna 140.

More specifically, for example, the transmission data judgment section 190 judges whether or not there is data to be transmitted by using the adaptive array antenna 140, based on a usage state of the communication device 100-3. Hereinafter, an example of the case where the communication device 100-3 is an ultrasonic probe (diagnostic equipment) will be described.

As an example, the communication device 100-3 is an ultrasonic probe, and includes an ultrasonic transmission/reception element (not shown in the figure) which transmits/receives ultrasonic waves, and a mechanism (not shown in the figure) which generates information of echo waveforms from the received ultrasonic waves. Also, the communication device 100-3 transmits the generated information of echo waveforms by wireless communication to a communication device 200 which is an ultrasonic diagnostic device. Further, the communication device 100-3 includes a pressure sensor (not shown in the figure) located close to this ultrasonic transmission/reception element. Since the ultrasonic waves are mostly reflected at the boundary surface between the ultrasonic probe and air, in the case where the ultrasonic probe is not in contact with a measurement target, the ultrasonic probe will not be able to receive effective ultrasonic waves. Therefore, since the information of the echo waveforms is not effective in the case where the pressure sensor does not detect a pressure, it is needless to say that there will be no data to be transmitted.

In an example of such an ultrasonic probe, for example, the transmission data judgment section 190 judges whether or not there is data to be transmitted by using the adaptive array antenna 140, based on a detection condition of pressure of the pressure sensor. More specifically, for example, in the case where a pressure is detected by the pressure sensor, the transmission data judgment section 190 judges that there is data to be transmitted by using the adaptive array antenna 140. On the other hand, in the case where a pressure has not been detected by the pressure sensor, the transmission data judgment section 190 judges that there is no data to be transmitted by using the adaptive array antenna 140.

In this way, depending on the type of the communication device 100-3, it is possible to judge whether or not there is data to be transmitted, from a usage condition of the communication device 100-3.

Further, the transmission data judgment section 190 may judge whether or not there is data to be transmitted by using the adaptive array antenna 140, based on the effectiveness of the data targeted to be transmitted.

For example, in the above described example of an ultrasonic probe, the transmission data judgment section 190 may judge whether or not there is data to be transmitted by using the adaptive array antenna 140, based on the depth strength of the received ultrasonic waves. More specifically, for example, if the depth strength of the received ultrasonic waves has exceeded a threshold, the transmission data judgment section 190 judges that there is data to be transmitted by using the adaptive array antenna 140. On the other hand, if the depth strength of the received ultrasonic waves has not exceeded a threshold, the transmission data judgment section 190 judges that there is no data to be transmitted by using the adaptive array antenna 140.

In this way, depending on the type of the communication device 100-3, there are cases where the data targeted to be transmitted is effective and there are cases where the data targeted to be transmitted is not effective. Therefore, it is possible to judge whether or not there is data to be transmitted, from the effectiveness of the data targeted to be transmitted.

Further, the transmission data judgment section 190 may judge whether or not there is data to be transmitted by using the adaptive array antenna 140, based on the state of the destination device of the data targeted to be transmitted.

For example, in the above described example of an ultrasonic probe, there is the possibility that the ultrasonic diagnostic device (communication device 200) will make a display for careful examination pause (freeze). Also, while the display of the ultrasonic diagnostic device is in a paused state, it is not necessary to transmit information of the echo waveforms to the ultrasonic diagnostic device. Therefore, it is needless to say that while the display of the ultrasonic diagnostic device is in a paused state, there is no data to be transmitted.

Therefore, for example, the transmission data judgment section 190 may judge that there is data to be transmitted by using the adaptive array antenna 140, based on whether or not the display of the communication device 200, which is an ultrasonic diagnostic device, is in a paused state. More specifically, for example, if the display of the communication device 200 is in a paused state, the transmission data judgment section 190 judges that there is no data to be transmitted by using the adaptive array antenna 140. Note that, for example, in the case where this display is in a paused state, the communication device 200 notifies this fact to the communication device 100.

### (Trigger control section 183)

The trigger control section 183 controls an update trigger for the beam pattern of the adaptive array antenna 140, based on the calculated change in direction of the communication device 100-3. In the third embodiment, similar to the trigger control section 180 of the first embodiment, the trigger control section 183 triggers an update for the beam pattern of the adaptive array antenna 140, based on the calculated change in direction of the communication device 100-3.

In particular, in the third embodiment, the trigger control section 183 stops control of the update trigger, in the case where it is judged that there is no data to be transmitted by using the adaptive array antenna 140. More specifically, for example, in the case where the transmission data judgment section 190 judges that there is no data to be transmitted by using the adaptive array antenna 140, the trigger control section 183 stops control of the update trigger for the beam pattern based on the change in direction of the communication device 100-3.

Further, for example, in the case where the transmission data judgment section 190 judges that there is data to be transmitted by using the adaptive array antenna 140, the trigger control section 183 restarts control of the update trigger for the beam pattern based on the change in direction of the communication device 100-3.

By such a stopping of control of the update trigger, it becomes possible to suppress an update for the beam pattern, in the case where there is no data to be transmitted, that is, in the case where there is no advantage in updating the beam pattern. Therefore, power consumption can be reduced.

### <4.2. Flow of the processes>

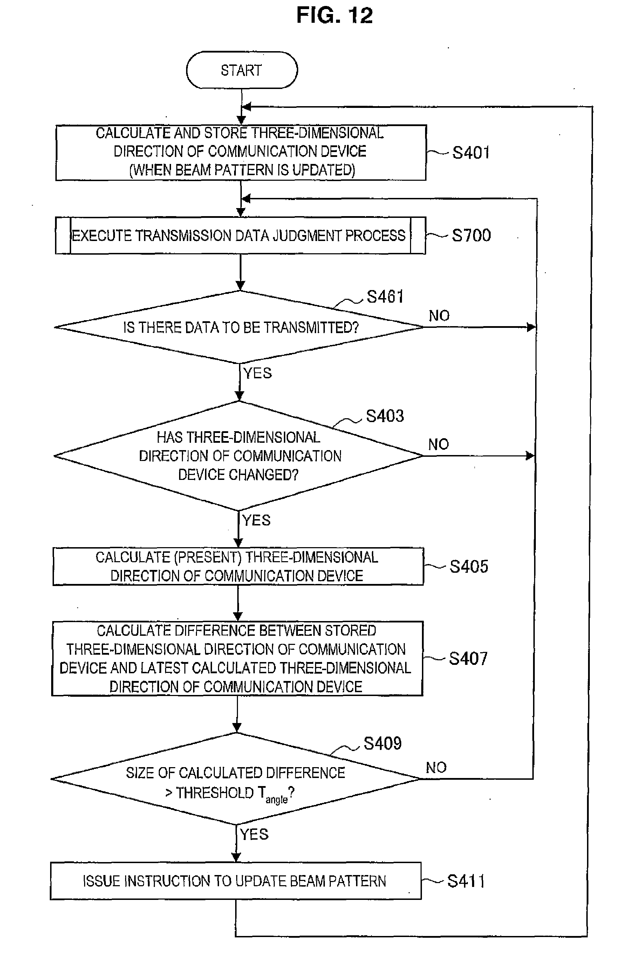

Next, various processes according to the third embodiment will be described with reference to FIG. 12. Note that there is no difference between the first embodiment and the third embodiment for the beam pattern update control process and the beam pattern update process included in this process. Therefore, here the update trigger control process of the third embodiment and the transmission data judgment process included in this process will be described.

### (Update trigger control process)

An example of an update trigger control process according to the third embodiment will be described with reference to FIG. 12. FIG. 12 is a flow chart which shows an example of a schematic flow for an update trigger control process according to the third embodiment. When a connection between the communication device 100-3 and the communication device 200 is established, this update trigger control process begins.

Note that here, only step S700 and step S461, which are the difference between the update trigger control process according to the first embodiment described with reference to FIG. 4 and the update trigger control process according to the third embodiment, will be described.

In step S700, the transmission data judgment section 190 executes a transmission data judgment process. That is, the transmission data judgment section 190 judges whether or not there is data to be transmitted by using the adaptive array antenna 140.

In step S461, in the case where it is judged that there is data to be transmitted, the process proceeds to step S403. Otherwise, the process returns to step S700.

### (Transmission data judgment process)

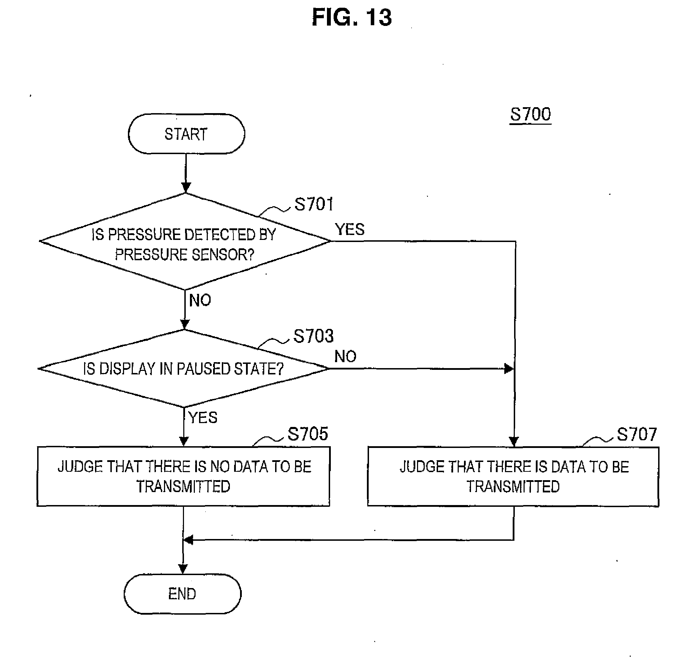

An example of a transmission data judgment process according to the third embodiment will be described with reference to FIG. 13. FIG. 13 is a flow chart which shows an example of a schematic flow for a transmission data judgment process according to the third embodiment.

In step S701, the transmission data judgment section 190 judges whether or not a pressure is detected by the pressure sensor. If a pressure is detected, the process proceeds to step S707. Otherwise, the process proceeds to step S703.

In step S703, the transmission data judgment section 190 judges whether or not the display of the communication device 200, which is an ultrasonic diagnostic device, is in a paused state. If this screen is in a paused state, the process proceeds to step S705. Otherwise, the process proceeds to step S707.

In step S705, the transmission data judgment section 190 judges that there is no data to be transmitted by using the adaptive array antenna 140. Then, the process ends.

In step S707, the transmission data judgment section 190 judges that there is data to be transmitted by using the adaptive array antenna 140. Then, the process ends.

Heretofore, the third embodiment of the present disclosure has been described, and according to this third embodiment, it becomes possible to suppress an update for the beam pattern, in the case where there is no data to be transmitted, that is, in the case where there is no advantage in updating the beam pattern. Therefore, power consumption can be reduced.

### <<5. The fourth embodiment>>

To continue, a fourth embodiment of the present disclosure will be described. According to the fourth embodiment of the present disclosure, similar to that of the third embodiment of the present disclosure, control of an update trigger is stopped, in the case where it is judged that there is no data to be transmitted by using the adaptive array antenna. While the third embodiment changed one part of the first embodiment, the fourth embodiment changes one part of the second embodiment. Hereinafter, the fourth embodiment will be described in the order of <5.1. Configuration of the communication device>, and <5.2. Flow of the processes>.

### <5.1. Configuration of the communication device>

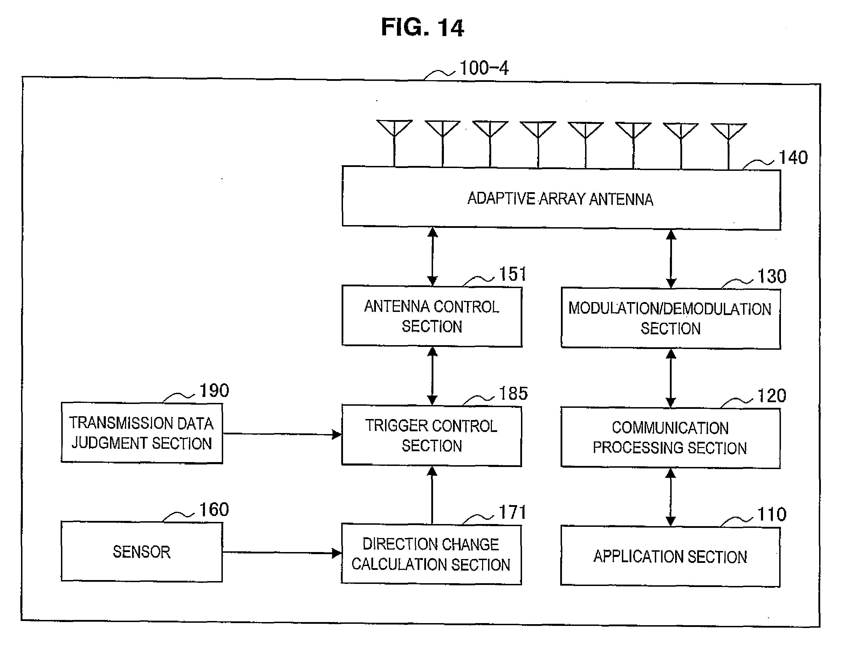

An example of a configuration of a communication device 100-4 according to the fourth embodiment will be described with reference to FIG. 14. FIG. 14 is a block diagram which shows an example of a configuration of the communication device 100-4 according to the fourth embodiment. With reference to FIG. 14, the communication device 100-4 includes an application section 110, a communication processing section 120, a modulation/demodulation section 130, an adaptive array antenna 140, an antenna control section 151, a sensor 160, a direction change calculation section 171, a trigger control section 185, and a transmission data judgment section 190.

Here, there is no difference between the second embodiment and the fourth embodiment for the application section 110, the communication processing section 120, the modulation/demodulation section 130, the adaptive array antenna 140, the antenna control section 151, the sensor 160, and the direction change calculation section 171. Further, the transmission data judgment section 190 according to the fourth embodiment is the same as the transmission data judgment section 190 according to the third embodiment. Therefore, here the trigger control section 185 will be described.

### (Trigger control section 185)

The trigger control section 185 controls an update trigger for the beam pattern of the adaptive array antenna 140, based on the calculated change in direction of the communication device 100-4. In the fourth embodiment, similar to the trigger control section 181 of the second embodiment, the trigger control section 185 changes a condition (that is, a beam pattern update condition) which triggers an update for the beam pattern of the adaptive array antenna 140, based on the calculated change in direction of the communication device 100-4.

In particular, in the fourth embodiment, the trigger control section 185 stops control of the update trigger, in the case where it is judged that there is no data to be transmitted by using the adaptive array antenna 140. More specifically, for example, in the case where the transmission data judgment section 190 judges that there is no data to be transmitted by using the adaptive array antenna 140, the trigger control section 185 stops control of the update trigger for the beam pattern based on the change in direction of the communication device 100-4.

Further, for example, in the case where the transmission data judgment section 190 judges that there is data to be transmitted by using the adaptive array antenna 140, the trigger control section 185 restarts control of the update trigger for the beam pattern based on the change in direction of the communication device 100-4.

By such a stopping of control of the update trigger, it becomes possible to suppress an update for the beam pattern, in the case where there is no data to be transmitted, that is, in the case where there is no advantage in updating the beam pattern. Therefore, power consumption can be reduced.

### <5.2. Flow of the processes>

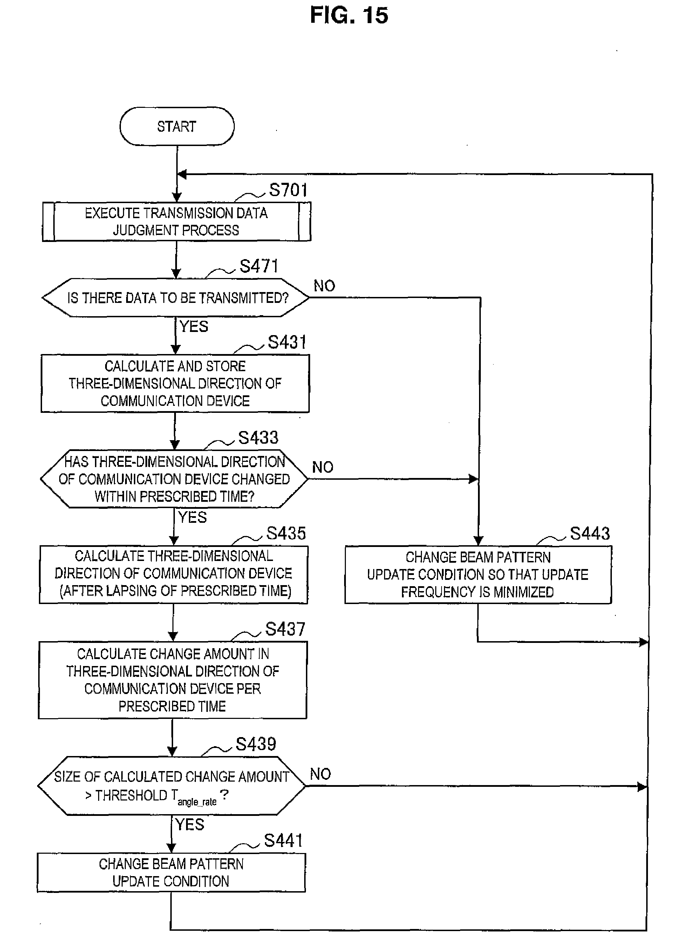

Next, various processes according to the fourth embodiment will be described with reference to FIG. 15. Note that there is no difference between the fourth embodiment and the second embodiment for the beam pattern update control process and the beam pattern update process included in this process. Therefore, here the update trigger control process of the fourth embodiment will be described.

### (Update trigger control process)

An example of an update trigger control process according to the fourth embodiment will be described with reference to FIG. 15. FIG. 15 is a flow chart which shows an example of a schematic flow for an update trigger control process according to the fourth embodiment. When a connection between the communication device 100-4 and the communication device 200 is established, this update trigger control process begins.

Note that here, only step S700 and step S471, which are the difference between the update trigger control process according to the second embodiment described with reference to FIG. 9 and the update trigger control process according to the fourth embodiment, will be described.

In step S700, the transmission data judgment section 190 executes a transmission data judgment process. That is, the transmission data judgment section 190 judges whether or not there is data to be transmitted by using the adaptive array antenna 140. Note that this transmission data judgment process is the same as the transmission data judgment process according to the third embodiment described with reference to FIG. 13.

In step S471, in the case where it is judged that there is data to be transmitted, the process proceeds to step S431. Otherwise, the process proceeds to step S443.

Heretofore, the fourth embodiment of the present disclosure has been described, and according to this fourth embodiment, it becomes possible to suppress an update for the beam pattern, in the case where there is no data to be transmitted, that is, in the case where there is no advantage in updating the beam pattern. Therefore, power consumption can be reduced.

### <<6. Conclusion>>

Up to here, communication devices and each of the processes according to embodiments of the present disclosure have been described by using FIGS. 1 to 15. According to embodiments of the present disclosure, a change in the direction of the communication device 100 is calculated, based on information detected by the sensor 160. Also, an update trigger for a beam pattern of the adaptive array antenna 140 is controlled, based on this calculated change.

In this way, it becomes possible to appropriately update a beam pattern of an adaptive array antenna with simple processes, without performing a detection of the state of the communication device on the reception side or a request of processes to the communication device on the reception side.

Further, as in the first embodiment, for example, a difference between the direction of the communication device 100 when the beam pattern of the adaptive array antenna 140 is updated, and the direction of the communication device 100 afterwards, is calculated as this change.

In this way, it becomes possible to know to what extent the direction of the peak of the beam has deviated from the original optimal direction.

Further, as in the first embodiment, for example, an update for the beam pattern of the adaptive array antenna 140 is triggered, based on this calculated change.

In this way, it becomes possible to immediately update the beam pattern, in the case where the direction of the communication device 100 significantly changes, that is, in the case where the direction of the peak of the beam significantly changes. That is, it becomes possible to appropriately update the beam pattern of the adaptive array antenna 140. Therefore, the tracking performance of the beam pattern will increase. As a result, the direction of the peak of the beam will hardly deviate from the optimal direction, even if the direction of the communication device 100 is significantly changed. Also, a decrease of the SN ratio of a wireless link and an increase in package errors can be suppressed. Further, in the case where the direction of the communication device 100 does not significantly change, in this way, since an update for the beam pattern is not triggered, power consumption can be suppressed to the minimum requirements.

Further, in this way, since triggering an update for the beam pattern is implemented by internal processes in the communication device 100, a detection of the state of the communication device 200, which is a communication partner, and a request of processes to the communication device 200 may both not be necessary. Therefore, complex processes between the communication devices are not generated. In addition, these internal processes are simple processes such as the calculation of a change in direction of the communication device 100. Therefore, it is possible for the beam pattern of the adaptive array antenna 140 to be updated by simple processes.

Further, as in the second embodiment, for example, a change amount in the direction of this communication device per a prescribed time is calculated as this change.

In this way, it becomes possible to know by what extent of speed the direction of the peak of the beam deviates.

Further, as in the second embodiment, for example, a condition (that is, a beam pattern update condition) which triggers an update for the beam pattern of the adaptive array antenna 140 is changed, based on this calculated change.

In this way, in the case where the direction of the communication device 100 significantly changes, an update frequency of the beam pattern can become higher. That is, it becomes possible to appropriately update the beam pattern of the adaptive array antenna 140. Therefore, the tracking performance of the beam pattern will increase. As a result, the direction of the peak of the beam will hardly deviate from the optimal direction, even if the direction of the communication device 100 is significantly changed. Also, a decrease of the SN ratio of a wireless link and an increase in package errors can be suppressed. Further, in the case where the direction of the communication device 100 does not significantly change, in this way, since an update frequency of the beam pattern does not become high, power consumption can be suppressed to the minimum requirements.

Further, in this way, since a change of the beam pattern update condition is implemented by internal processes in the communication device 100, a detection of the state of the communication device 200, which is a communication partner, and a request of processes to the communication device 200 may both not be necessary. Therefore, complex processes between the communication devices are not generated. In addition, these internal processes are simple processes such as the calculation of a change in direction of the communication device 100. Therefore, it is possible for the update frequency of the beam pattern of the adaptive array antenna 140 to be improved by simple processes.

Further, for example, as in each of the embodiments, this update trigger is controlled, based on a comparison result between the change in distance of the communication device 100 and a third threshold. Also, this third threshold is changed in accordance with a request of application software which uses wireless communication using the adaptive array antenna 140.

In this way, power consumption can be sufficiently suppressed to a necessary level while satisfying a request for communication quality from application software.

Further, for example, as in the third embodiment and the fourth embodiment, it is judged whether or not there is data to be transmitted by using the adaptive array antenna 140. Then, in the case where it is judged that there no data, control of this update trigger is stopped.

In this way, it becomes possible to suppress an update for the beam pattern, in the case where there is no data to be transmitted, that is, in the case where there is no advantage in updating the beam pattern. Therefore, power consumption can be reduced.

Further, for example, as in the third embodiment and the fourth embodiment, it is judged whether or not there is data to be transmitted by using the adaptive array antenna 140, based on a usage state of the communication device 100.

In this way, depending on the type of the communication device 100, it is possible to judge whether or not there is data to be transmitted, from a usage condition of the communication device 100.

Further, for example, as in the third embodiment and the fourth embodiment, it may be judged whether or not there is data to be transmitted by using the adaptive array antenna 140, based on the effectiveness of the data targeted to be transmitted.

Depending on the type of the communication device 100, since there are cases where the data targeted to be transmitted is effective and there are cases where the data targeted to be transmitted is not effective, in this way, it is possible to judge whether or not there is data to be transmitted, from the effectiveness of the data targeted to be transmitted.

It should be understood by those skilled in the art that various modifications, combinations, sub-combinations and alterations may occur depending on design requirements and other factors insofar as they are within the scope of the appended claims or the equivalents thereof.

For example, while in the first embodiment and the third embodiment an update for the beam pattern is triggered based on a change in direction of the communication device, and an update for the beam pattern is triggered based on whether a beam pattern update condition is satisfied, the present disclosure is not limited to this. For example, in the first embodiment and the third embodiment, the trigger of an update based on whether a beam pattern update condition is satisfied may not be performed. That is, only the trigger of an update based on a change in direction of the communication device may be performed.

Further, for example, in the first embodiment and the third embodiment, an update for the beam pattern of the adaptive array antenna is triggered, based on a difference between the direction of the communication device when the beam pattern is updated, and the direction of the communication device afterwards. On the other hand, in the second embodiment and the fourth embodiment, a condition which triggers an update for the beam pattern of the adaptive array antenna is changed, based on a change amount in the direction of the communication device per a prescribed time. However, the present disclosure is not limited to a combination of controls with such conditions. For example, the condition which triggers an update for the beam pattern of the adaptive array antenna may be changed, based on a difference between the direction of the communication device when the beam pattern is updated, and the direction of the communication device afterwards. Further, for example, an update for the beam pattern of the adaptive array antenna may be triggered, based on a change amount in the direction of the communication device per a prescribed time.

Further, the process steps in the communication device according to an embodiment of the present disclosure may not necessarily be executed in a time series according to order described in the flow charts. For example, the process steps in the communication control processes (for example, the update trigger control process, the beam pattern update control process, the beam pattern update process, the transmission data judgment process, and the like) may be executed in parallel, even if the process steps are executed in an order different to the order described in the flow charts.

Further, it is possible to create a computer program, for displaying the functions equivalent to each configuration of the above described communication device, in the hardware of a CPU, ROM, RAM or the like which is built-in to the communication device. Further, a storage medium which stores this computer program may also be provided.

Additionally, the present technology may also be configured as below.
(1) A communication device, including:
   an adaptive array antenna;
   a calculation section which calculates a change in direction of the communication device based on information detected by a sensor; and
   a control section which controls an update trigger for a beam pattern of the adaptive array antenna based on the calculated change.
(2) The communication device according to (1),
   wherein the calculation section calculates, as the change, a difference between a direction of the communication device when the beam pattern of the adaptive array antenna is updated, and a direction of the communication device afterwards.
(3) The communication device according to (1),
   wherein the calculation section calculates, as the change, a change amount in a direction of the communication device per a prescribed time.
(4) The communication device according to any one of (1) to (3),
   wherein the control section triggers an update for the beam pattern of the adaptive array antenna based on the calculated change.
(5) The communication device according to any one of (1) to (3),
   wherein the control section changes a condition which triggers an update for the beam pattern of the adaptive array antenna based on the calculated change.
(6) The communication device according to (5),
   wherein the condition includes the lapsing of an update period for regularly updating the beam pattern of the adaptive array antenna, and
   wherein the control section changes a length of the update period.
(7) The communication device according to (5) or (6),
   wherein the condition includes a condition that a frequency of a communication error in wireless communication using the adaptive array antenna exceeds a first threshold, and
   wherein the control section changes the first threshold.
(8) The communication device according to any one of (5) to (7),
   wherein the condition includes a condition that a communication amount in wireless communication using the adaptive array antenna exceeds a second threshold, and
   wherein the control section changes the second threshold.
(9) The communication device according to any one of (1) to (8),
   wherein the control section controls the update trigger based on a comparison result between the calculated change and a third threshold, and
   wherein the third threshold is changed in accordance with a request of application software which uses wireless communication using the adaptive array antenna.
(10) The communication device according to any one of (1) to (9), further including:
   a judgment section which judges whether or not there is data to be transmitted by using the adaptive array antenna,
   wherein the control section stops control of the update trigger in a case where it is judged that there is no data.
(11) The communication device according to (10),
   wherein the judgment section judges whether or not there is data to be transmitted by using the adaptive array antenna based on a usage state of the communication device.
(12) The communication device according to (10) or (11),
   wherein the judgment section judges whether or not there is data to be transmitted by using the adaptive array antenna based on an effectiveness of data targeted to be transmitted.
(13) A communication control method, including:
   calculating a change in direction of a communication device including an adaptive array antenna based on information detected by a sensor; and
   controlling an update trigger for a beam pattern of the adaptive array antenna based on the calculated change.
(14) A program for causing a computer, which controls a communication device including an adaptive array antenna, to function as:
   a calculation section which calculates a change in direction of the communication device based on information detected by a sensor; and
   a control section which controls an update trigger for a beam pattern of the adaptive array antenna based on the calculated change.

The present disclosure contains subject matter related to that disclosed in Japanese Priority Patent Application JP 2012-197162 filed in the Japan Patent Office on September 7, 2012, the entire content of which is hereby incorporated by reference.

## Claims

1. A communication device, comprising:
an adaptive array antenna;
a calculation section which calculates a change in direction of the communication device based on information detected by a sensor; and
a control section which controls an update trigger for a beam pattern of the adaptive array antenna based on the calculated change.

2. The communication device according to claim 1,
wherein the calculation section calculates, as the change, a difference between a direction of the communication device when the beam pattern of the adaptive array antenna is updated, and a direction of the communication device afterwards.

3. The communication device according to claim 1 or 2,
wherein the calculation section calculates, as the change, a change amount in a direction of the communication device per a prescribed time.

4. The communication device according to anyone of claims 1 to 3,
wherein the control section triggers an update for the beam pattern of the adaptive array antenna based on the calculated change.

5. The communication device according to anyone of claims 1 to 3,
wherein the control section changes a condition which triggers an update for the beam pattern of the adaptive array antenna based on the calculated change.

6. The communication device according to claim 5,
wherein the condition includes the lapsing of an update period for regularly updating the beam pattern of the adaptive array antenna, and
wherein the control section changes a length of the update period.

7. The communication device according to claim 5 or 6,
wherein the condition includes a condition that a frequency of a communication error in wireless communication using the adaptive array antenna exceeds a first threshold, and
wherein the control section changes the first threshold.

8. The communication device according to anyone of claims 5 to 7,
wherein the condition includes a condition that a communication amount in wireless communication using the adaptive array antenna exceeds a second threshold, and
wherein the control section changes the second threshold.

9. The communication device according to anyone of claims 1 to 8,
wherein the control section controls the update trigger based on a comparison result between the calculated change and a third threshold, and
wherein the third threshold is changed in accordance with a request of application software which uses wireless communication using the adaptive array antenna.

10. The communication device according to anyone of claims 1 to 9, further comprising:
a judgment section which judges whether or not there is data to be transmitted by using the adaptive array antenna,
wherein the control section stops control of the update trigger in a case where it is judged that there is no data.

11. The communication device according to claim 10,
wherein the judgment section judges whether or not there is data to be transmitted by using the adaptive array antenna based on a usage state of the communication device.

12. The communication device according to claim 10 or 11,
wherein the judgment section judges whether or not there is data to be transmitted by using the adaptive array antenna based on an effectiveness of data targeted to be transmitted.

13. A communication control method, comprising:
calculating a change in direction of a communication device including an adaptive array antenna based on information detected by a sensor; and
controlling an update trigger for a beam pattern of the adaptive array antenna based on the calculated change.

14. A program for causing a computer, which controls a communication device including an adaptive array antenna, to function as:
a calculation section which calculates a change in direction of the communication device based on information detected by a sensor; and
a control section which controls an update trigger for a beam pattern of the adaptive array antenna based on the calculated change.
